(19) Europäisches Patentamt / European Patent Office / Office européen des brevets

(11) **EP 4 676 032 A1**

(12) **EUROPEAN PATENT APPLICATION**

(43) Date of publication:
07.01.2026 Bulletin 2026/02

(21) Application number: 24306083.7

(22) Date of filing: 02.07.2024

(51) International Patent Classification (IPC):
*H04N 19/105* (2014.01)   *H04N 19/11* (2014.01)
*H04N 19/176* (2014.01)   *H04N 19/593* (2014.01)

(52) Cooperative Patent Classification (CPC):
H04N 19/105; H04N 19/11; H04N 19/176;
H04N 19/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• CHEN, Ya
 35700 RENNES (FR)
• LE LEANNEC, Fabrice
 35830 BETTON (FR)
• NASER, Karam
 35250 MOUAZE (FR)
• RADOSAVLJEVIC, Milos
 35000 RENNES (FR)

(74) Representative: Interdigital
Immeuble ZEN 2
845 A, avenue des Champs Blancs
35510 Cesson-Sévigné (FR)

(54) **METHOD AND APPARATUS FOR ENCODING/DECODING WITH INTRA MERGE PREDICTION MODE**

(57) In various implementations, method and devices are disclosed that encode or decode a block of a picture with an intra merge prediction mode wherein an intra merge candidates list is constructed, an intra merge candidate from the intra merge candidates list is selected; and the block is encoded or decoded based at least on the selected intra merge candidate. According to a first aspect, the intra merge candidates list may include at least one temporal intra merge candidate for the block belonging to an inter slice. According to a second aspect, the intra merge candidates list may include at least one history-based intra merge candidate. According to another aspect, intra merge candidates list may be ordered based on template cost.

FIG. 11

**Description**

TECHNICAL FIELD

The present embodiments generally relate to a method and an apparatus for video encoding or decoding with intra merge prediction mode.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

In various implementations, methods and devices are disclosed that that encode or decode a block of a picture with a intra merge prediction mode wherein an intra merge candidates list is constructed, an intra merge candidate from the intra merge candidates list is selected; and the block is encoded or decoded based at least on the selected intra merge candidate.

According to a first aspect, a method of video decoding is disclosed that comprises determining, based on at least one indication from a video bitstream, whether a block is coded in an intra merge prediction mode; responsive to determining that the block is coded in the intra merge prediction mode, constructing an intra merge candidates list that includes at least one temporal intra merge candidate for the block belonging to an inter slice, selecting an intra merge candidate from the intra prediction merge candidates list; and decoding the block based on the selected intra merge candidate.

According to a second aspect, a method of video encoding is disclosed that comprises determining whether a block is coded in an intra merge prediction mode; responsive to determining that the block is coded in the intra merge prediction mode, constructing an intra merge candidates list that includes at least one temporal intra merge candidate for the block belonging to an inter slice, selecting an intra merge candidate from the intra prediction merge candidates list; and encoding the block based on the selected intra merge candidate.

According to a third aspect, a method of video decoding is disclosed that comprises determining, based on at least one indication from a video bitstream, whether a block is coded in an intra merge prediction mode; responsive to determining that the block is coded in the intra merge prediction mode, constructing an intra merge candidates list that includes at least one history-based intra merge candidate, selecting an intra merge candidate from the intra prediction merge candidates list; and decoding the block based on the selected intra merge candidate.

According to a fourth aspect, a method of video encoding is disclosed that comprises determining whether a block is coded in an intra merge prediction mode; responsive to determining that the block is coded in the intra merge prediction mode, constructing an intra merge candidates list that includes at least one history-based intra merge candidate, selecting an intra merge candidate from the intra prediction merge candidates list; and encoding the block based on the selected intra merge candidate.

One or more embodiments also provide an apparatus for encoding/decoding video comprising one or more processors and at least one memory coupled to said one or more processors, wherein said one or more processors are configured to perform the encoding/decoding method according to any of the embodiments described herein.

One or more embodiments also provide a computer program comprising instructions which when executed by one or more processors cause the one or more processors to perform the encoding or decoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

[0011]

　　FIG. 1 illustrates a block diagram of a system within which aspects of the present embodiments may be implemented.

　　FIG. 2 illustrates a block diagram of an embodiment of a video encoder.

　　FIG. 3 illustrates a block diagram of an embodiment of a video decoder.

　　FIG. 4 illustrates an example of a block predicted with Template-based Intra Mode Derivation (TIMD) according to prior art.

　　FIG. 5 illustrates an example of a block predicted with Decoder side Intra Mode Derivation (DIMD) according to prior art.

FIG. 6 illustrates an example of a block predicted with Intra Template Matching Prediction IntraTMP according to prior art.

FIG. 7 illustrates examples of neighboring blocks considered for the intra merge list construction according to an embodiment.

FIG. 8 illustrates a method for constructing an intra merge candidates list according to an embodiment.

FIG. 9 illustrates a method for managing a history-based intra (HI) table according to an embodiment.

FIG. 10 illustrates an example of history-based table according to an embodiment.

FIG. 11 illustrates a method for constructing an intra merge candidates list according to an embodiment.

FIG. 12 illustrates a position of a collocated block of a current block in a reference picture with example of additional positions according to a variant embodiment.

FIG. 13 illustrates a shifted position of a collocated block of the current block in a reference picture according to a variant embodiment.

Fig 14 and FIG.15 illustrate different examples of a current block and a neighboring template according to various embodiments.

FIG. 16 illustrate a generic method for video encoding or video decoding using an intra merge mode according to an embodiment.

DETAILED DESCRIPTION

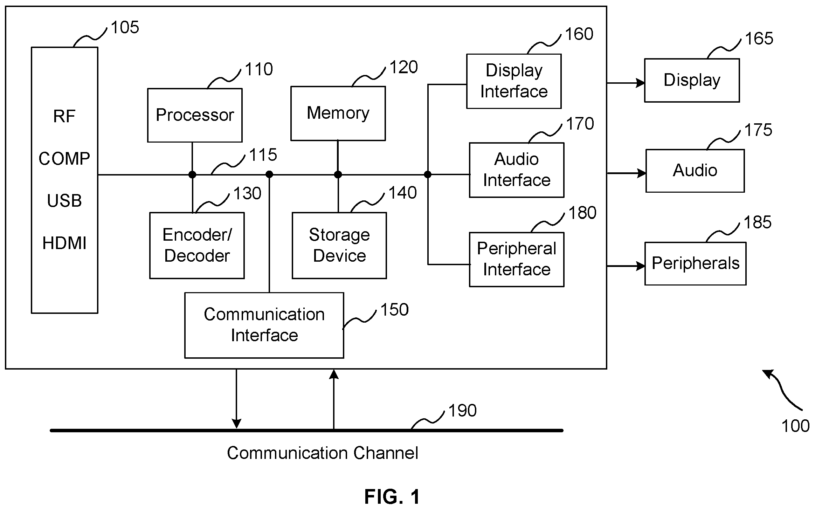

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or WC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

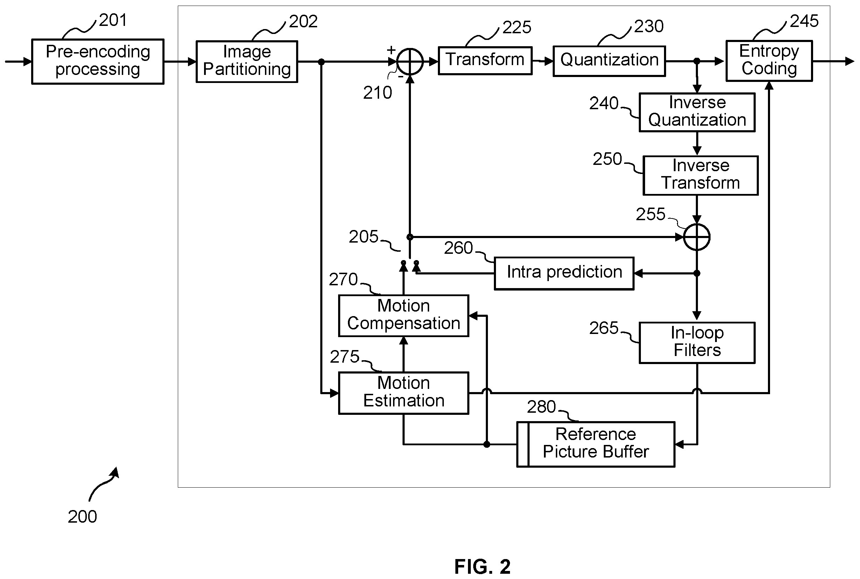

FIG. 2 illustrates an example video encoder 200, such as a WC (Versatile Video Coding) encoder. FIG. 2 may also illustrate an encoder in which improvements are made to the VVC standard or an encoder employing technologies similar to WC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream.

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) or linear (ex: Wiener adaptive linear filter, ALF) filtering to reduce encoding artifacts. The filtered image is stored at a reference picture buffer (280).

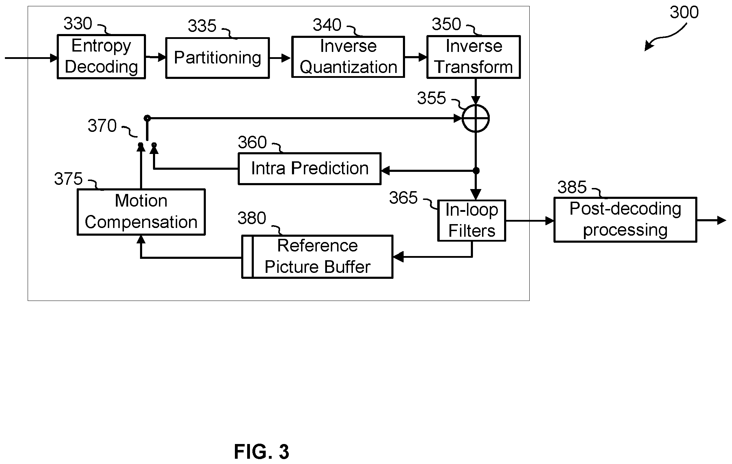

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing WC (Versatile Video Coding) standard. The current development of ECM includes various refinements for Intra Prediction that are detailed in the following.

Feature(s) associated with Template-based Intra Mode Derivation (TIMD) are provided herein.

Template-based Intra Mode Derivation TIMD, relies on the assumption that the intra prediction modes generating the predictions of a template of reconstructed pixels around a given block to be predicted with highest qualities most likely yield the predictions of this block with highest qualities.

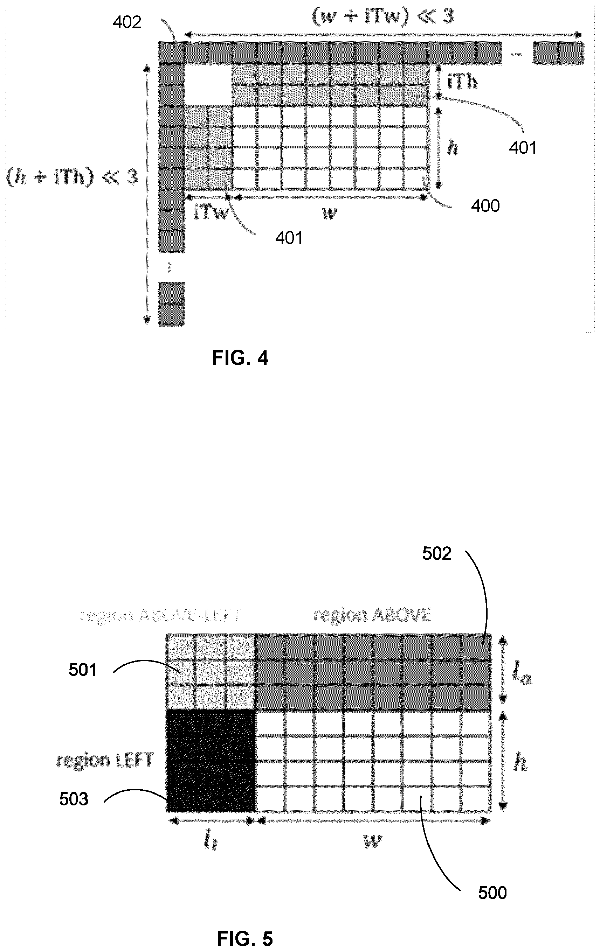

FIG. 4 illustrates an example of a block predicted with Template-based Intra Mode Derivation (TIMD) according to prior art.

For a given block 400 predicted via TIMD, the inference of intra prediction modes indices consists in 3 passes of tests of modes on the template 401 of reconstructed pixels surrounding this block in terms of prediction Sum of Absolute Transform Differences SATD.

At the first pass, for a given $w \times h$ block 400, for each index of intra prediction mode in the list L being the Most Probable Mode MPM list of the block 400 supplemented with default indices in {DC_IDX, HOR_IDX, VER_IDX} if these indices do not already exist in this list of MPMs, this mode computes a prediction of the template 401 of reconstructed pixels surrounding the block 400 from the set of reference samples 402 of the template 401. The SATD between the template 401 and its prediction is calculated. The two intra prediction modes with minimum template prediction SATDs are retained.

At the second pass, for several extended wide-angle intra prediction modes, each of them computes a prediction of the template 401 from the refences samples 402, and the SATD between the template 401 and its prediction is calculated. If needed, the two intra prediction modes with minimum template prediction SATDs are updated.

At the third pass, for each of the two intra prediction modes retained by the second pass, if this mode is neither PLANAR nor DC, the two closest directional intra prediction modes are also tested on the template 401 in terms of prediction SATD. If needed, the two intra prediction modes with minimum template prediction SATDs are updated.

Finally, a blending condition is defined. Let timdIsBlend denote the flag indicating whether the TIMD blending applies. Let $satd_0$ and $satd_1$ be the smallest and second smallest prediction SATDs respectively:

$$\mathrm{timdIsBlend} = satd_1 < 2satd_0.$$

If timdIsBlend is false, the final prediction of the current block 400 from its set of reference samples 402 is performed using the first retained intra prediction mode. Otherwise, the final prediction of the current block arises from the blending of the two predictions of this block via the first and second retained intra prediction modes respectively. The blending weights depend on $satd_0$ and $satd_1$.

According to a further refinement of TIMD, an additional non-angular and location dependent TIMD has appeared. During the step for inferring intra prediction modes indices, before the first pass, PLANAR and DC may be tested on the template of reconstructed pixels surrounding the given block in terms of prediction SATD. The index $idx_{NA} \in$ {PLANAR_IDX, DC_IDX} of the non-angular intra prediction mode with the smallest prediction SATD $satd_{NA}$ may be saved. Then, after the third pass, if $idx_{NA}$ is different from the indices of the two retained intra prediction modes and $satd_{NA} < 1.5\ satd_0$, during the subsequent step for generating the final prediction of the given block, this final prediction may result from the blending of the two predictions of this block via the first and second retained intra prediction modes respectively and the prediction of this block via the intra prediction mode of index $idx_{NA}$. The blending weights depend on $satd_0$, $satd_1$, and $satd_{NA}$.

Feature(s) associated with Decoder side intra mode derivation (DIMD) are provided herein.

Decoder side Intra Mode Derivation (DIMD) relies on the assumption that the reconstructed pixels surrounding a given block to be predicted carry information to infer the texture directionality in this block, i.e. the intra prediction modes that most likely generate the predictions with the highest qualities.

FIG. 5 illustrates an example of a block 500 predicted with Decoder side Intra Mode Derivation (DIMD) according to prior art.

First, gradients may be extracted from a context 501, 502, 503 of reconstructed pixels around this block 500. Then, these gradients may be used to fill a histogram of gradients (HoG). Finally, the intra prediction modes that most likely give the predictions with highest qualities may be derived from this HoG. It may derive up to five intra modes from the reconstructed neighbor samples, and those five predictors may be combined with the planar mode predictor using the weights derived from the HoG.

A HoG, computed on a three-sample wide/high L-shaped template formed of already reconstructed samples, may be built by accumulating the magnitudes of all gradients for all the samples within the light gray 501 (region ABOVE LEFT), dark gray 502 (region ABOVE), and black 503 (region LEFT) region of FIG. 5.

Feature(s) associated with Intra Template Matching Prediction (IntraTMP) are provided herein.

Intra Template Matching Prediction IntraTMP is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

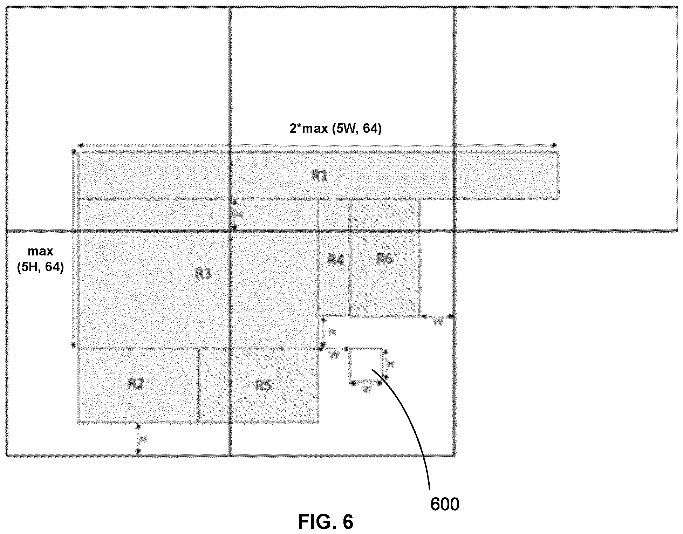

FIG. 6 illustrates an example of a block 600 predicted with Intra Template Matching Prediction IntraTMP according to prior art.

The prediction signal may be generated by matching the L-shaped, Top-only or Left-Only causal neighbor of the current block with another block in a predefined search area R1-R6 as shown in FIG. 6. Fig.

6 illustrates 6 predefined search areas, i.e., R1 to R6, which contain the reconstructed samples from the top and left CTUs as well as part of the reconstructed samples within the current CTU that are located above, left, bottom-left and top-right to the current block. Within each region, the decoder may construct a candidate list of up to "19" template matching block vectors that may be ranked in ascending order according to the template cost (SAD). The following modes may be supported:

- Single predictor: A single predictor is selected from the candidate list;
- Fusion of multiple predictors: multiple predictors are blended to derive the final prediction block; the blending weights may either be computed from the template matching cost of each predictor, or with Wiener-filter based weight derivation method;
- Sub-pel precision: When single predictor is used, sub-pel precision may be used with 1/2-pel precision, 1/4-pel precision and 3/4-pel precision, each with 8 possible directions;
- Linear filter model: A linear filter may be learned between the reference template and current template and be applied to reference block; this mode may be used for single predictor when sub-pel precision is not used.

Feature(s) associated with Intra Merge Mode are provided herein.

An intra merge mode list was recently proposed to JVET. The intra merge mode list includes intra modes information from neighboring blocks. A list of intra mode candidates may be constructed using the intra modes from the neighbor blocks. It is similar to inter merge mode, but instead of storing motion vector, the neighboring intra modes are added to the list.

Several intra merge candidate lists may be constructed according to the intra mode used for the selected neighboring block, such as DIMD, TIMD, IntraTMP. Example of the candidate lists construction {Cand0, Cand1, Cand2} may be defined as follows:

- Cand0 stores DIMD information {intra angular indexes, weighting factors, location dependency index} retrieved from a neighbor block coded by DIMD mode,
- Cand1 stores TIMD information {intra angular indexes, weighting factors} retrieved from a neighbor block coded by TIMD mode,
- Cand2 stores intraTMP fusion information {BVs, weighting factors, LIC info} retrieved from a neighbor block coded by intraTMP fusion mode.

However, the intra merge candidate lists are not limited to these examples and another intra merge candidate list may comprises for instance regular directional prediction mode.

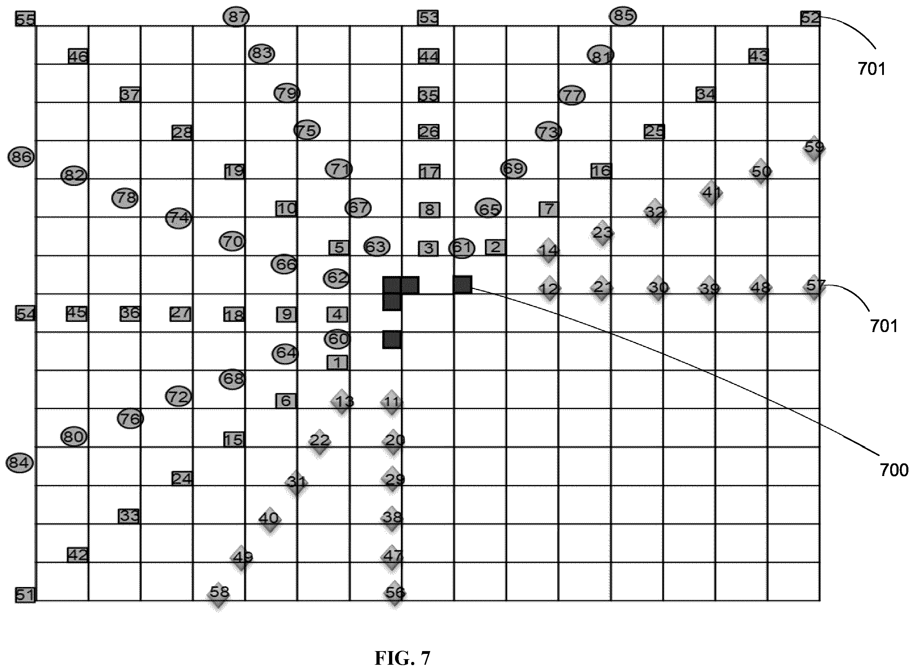

Fig. 7 illustrates examples of adjacent 700 and non-adjacent 701 spatial neighboring blocks considered for the intra merge list construction. The regular block grid of FIG. 7 may illustrate a fixed search range along with an example of ordering (numbers from 1 to 87) of the search positions within the grid.

A flag may be signalled to indicate whether to enable the proposed intra merge mode. If the flag is true, at least one intra merge candidate list is constructed. If there are more than one intra merge lists, a list index may be signalled to indicate which intra merge list is selected. An index may be further signalled to indicate which candidate is used for this block.

It is desirable to further improve the performance of Intra Merge Mode by either adding more diversity in the candidates of the Intra Merge Mode list or by the handling of the Intra Merge Mode list.

The present document proposes a method for improving the intra merge candidate list.

In a first embodiment, a history-based intra merge candidate is included in the merge candidate list.

In a second embodiment, a temporal intra merge candidate is included in the merge candidate list.

In a third embodiment, intra merge candidates are re-ordered based on the template cost.

In a fourth embodiment, the fusion of multiple intra merge candidates is allowed.

In a fifth embodiment, the intra merge mode is extended to apply on other remaining intra prediction modes, and on chroma blocks.

A generic embodiment for video encoding or video decoding using an intra merge mode.

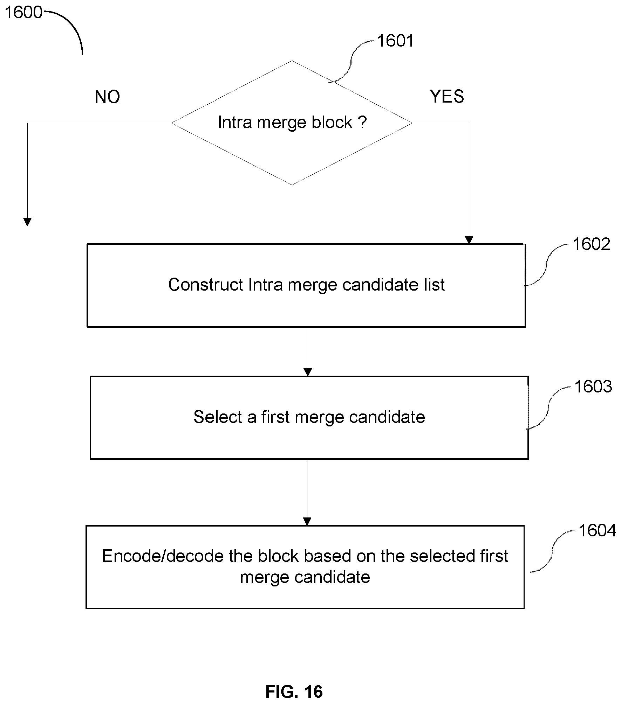

FIG. 16 illustrate a generic method for video encoding or video decoding using an intra merge mode according to an embodiment. The method 1600 of FIG. 16, may be implemented in an encoder of FIG. 2 or a decoder of FIG. 3. The method may obtain an information (an intra merge prediction mode) indicating a coding of a block of a picture with a merge-based intra prediction mode. For instance, in a decoder, the method may obtain such information from a syntax element encoded in the bitstream. For instance, in an encoder, the method may determine that a block is to be encoded with a merge-based intra prediction mode, for example based on RD cost, the information is then signaled to a decoder for instance as a syntax element in the bitstream. Responsive 1601 to determining that the block is coded in the merge-based intra prediction mode, in a step 1602, a list of intra merge candidates is constructed as described hereafter according to various exemplary embodiments. According to different variant, one or more intra merge candidate lists may be constructed. According to different embodiments, the intra merge candidate lists may be included an history-based intra merge candidate, or temporal intra merge candidate. Then, in a step 1603, an intra merge candidate is obtained from the intra prediction candidate list. According to an embodiment, the selection of an intra merge candidate in a list may be based on template cost. In the variant where there are more than one intra merge lists, a list index may be signalled to indicate which intra merge list is selected. In another variant, an index may be further signalled to indicate which candidate in the list is used for this block. Then, an intra prediction of the block is obtained from the selected intra merge candidate, and the block is encoded or decoded 1604 by using the intra prediction of the block.

Feature(s) associated with History-based Intra merge candidates are provided herein.

In a first embodiment, a history-based intra merge candidate is included in the merge candidate list for intra merge mode. For instance, intra prediction modes and/or the associated information of previously intra-coded blocks, which may be far away from current block, may be treated as history-based candidates. Multiple history-based candidates may be stored in a table with a limited number, named as the history-based intra (HI) table, and this table may be maintained during the encoding/decoding process on-the-fly.

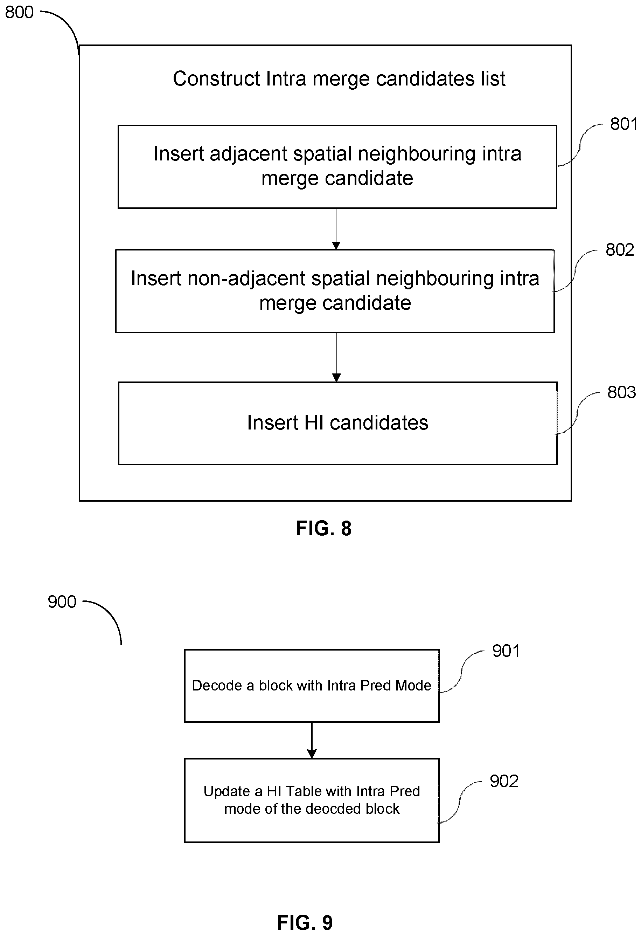

FIG. 8 illustrates a method for constructing an intra prediction merge candidates list according to an embodiment. The method 800 may be implemented in the constructing step 1602 of the method 1600 for encoding or decoding according to a generic embodiment. In a first step 801, intra prediction mode from adjacent spatial neighboring block may be inserted into an intra merge candidate list. An example adjacent spatial neighboring block 700 is illustrated on FIG. 7. In a second step 802, intra prediction mode from non-adjacent spatial neighboring block may be inserted into the intra merge candidate list. According to different variants implementing one or more intra merge candidate lists, adjacent and non-adjacent intra prediction mode candidates may be appended in a same or into distinct lists, for instance according to the intra prediction mode. An example of non-adjacent spatial neighboring block 701 is illustrated on FIG. 7. Then, in a step 803, an history-based intra candidate may be inserted in the intra merge candidate list. According to a variant, the intra merge candidate list comprises a limited number of candidates, and the history-based intra candidate may be inserted in the intra merge candidate list if the list is not full. According to another variant, a plurality of intra merge candidate lists is defined according to the intra prediction mode, such as the following non-limiting examples DIMD, TIMD, intraTMP. According to yet another feature, a History-based Intra (HI) table, stores the history-based candidates. Advantageously, History-based Intra merge candidate allows inferring intra modes from blocks that are spatially more remote than the adjacent and non-adjacent neighbors from the pre-determined search range.

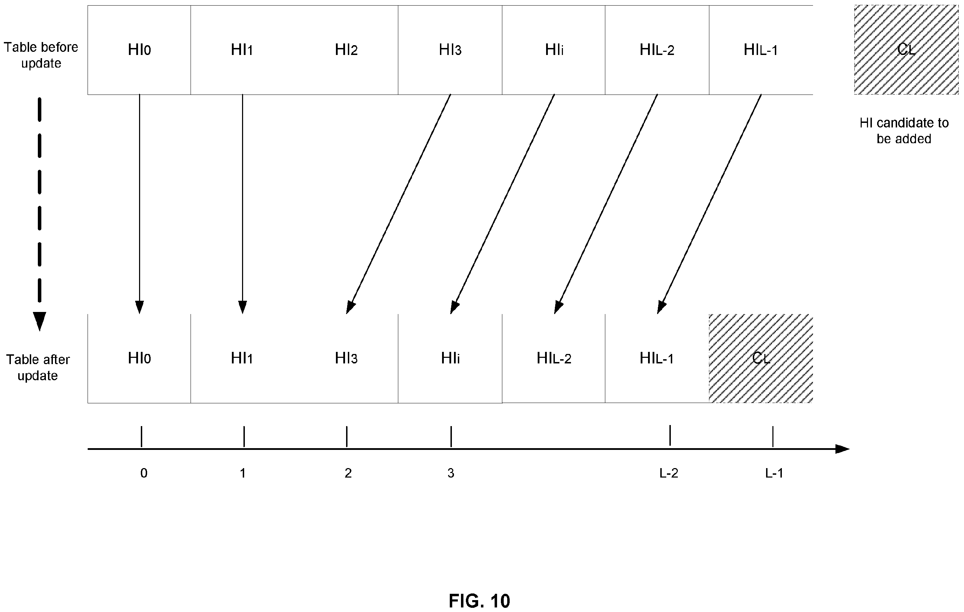

FIG. 9 illustrates a method for managing a history-based intra (HI) table according to an embodiment. In a step 901, the intra prediction mode of a block coded with intra prediction is obtained. The intra prediction mode of a coded/decoded block is an history-based candidate to store in a HI table. In a step 902, a table with HI candidate is updated with the history-based candidate, ie intra prediction mode of the coded/decoded block. The management of the HI table will be detailed in the following with reference to FIG. 10.

According to a variant, as for the intra candidates lists, more than one HI tables may be constructed according to the intra prediction mode used for the history-based candidate. For instance, separate HI tables for DIMD, TIMD and IntraTMP {HI0, HI1, HI2} may be generated as follows:

- HI0 stores DIMD information {intra angular indexes, weighting factors, location dependency index} retrieved from a history-based candidate of a block coded by DIMD mode;
- HI1 stores TIMD information {intra angular indexes, weighting factors} retrieved from a history-based candidate of a block coded by TIMD mode;
- HI2 stores intraTMP information {BVs, weighting factors, LIC info} retrieved from a history-based candidate of a block coded by intraTMP mode.

As previously, different arrangement of tables may be contemplated by the skilled in the art, and the above example is not limiting of the embodiment of multiple lists or tables.

Thus, as shown in FIG. 8, after including spatial adjacent and non-adjacent candidates in 801 and 802, the history-based intra candidates stored in the HI table(s) may be added into the corresponding intra merge candidate list if the list is not full. To avoid including redundant intra merge modes and/or associated information in the intra merge candidate list, pruning operations are applied. According to another variant, the HI table(s) may also have a limited number of history-based candidates and pruning operations may also apply to HI table(s).

According to a variant, the HI table is reset (emptied) when starting coding/decoding a new CTU. Whenever there is an intra-coded block, a pair/set of intra prediction modes and other associated information will be added to the last entry of the table as a new HI candidate. Alternatively, the HI table is reset only when started coding/decoding a new CTU line. Alternatively, the HI table is reset only every N CTU lines, N being a positive integer e.g. 3.

FIG. 10 illustrates an example of an update of an history-based table according to an embodiment.

For instance, the HI table size is set to be one predefined value $S$ (e.g., $L = 6$), which indicates up to $L$ HI candidates may be added to the table. If there are more than $L$ HI candidates from the previously coded blocks, a FIFO rule is applied so the table always contains the latest $L$ intra prediction mode candidates previously coded. When appending a HI candidate to the table, redundancy check is firstly conducted to find whether there is an identical HI candidate in the table. If found, the identical HI candidate is removed from the table and all the HI candidates behind it are moved forward with indices reduced by 1, and the identical HI candidate is inserted to the last entry of the table. If no redundancy is found and the HI table size is *L*, the first HI candidate is removed, and all other HI candidates are moved forward. Finally, the new HI candidate is appended at the end of the table.

In the example of FIG. 10, the FIFO rule is applied to remove a HI candidate and add a new one to the table according to an embodiment. Suppose there are *L* HI candidates in the table denoted by $HI_i$, wherein *i* denotes the HI candidate index and *i* is within the range of [0, *L* - 1], as shown in the above row of FIG. 10. When a new HI candidate denoted as $C_L$ is to be added, it is firstly compared to all existing HI candidates. If $C_L$ is identical to $HI_2$, all the HI candidates with indices larger than 2 will be firstly moved forward toward the head of the table. Finally, $C_L$ is put at the end of the HI table.

In one variant of the first embodiment, the HI table is constructed based on the occurrence of the already existing HI candidates in the table. When appending a new HI candidate to the table, redundancy check is firstly conducted to find whether there is an identical HI candidate in the table. If found, the count of the identical HI candidate is accumulated, and the current HI table is reordered. For example, if the occurrence count of the new HI candidate is higher than the last entry of the current HI table, it moves to the last entry of the table. It means that the HI candidate in the last entry of the table is considered to be "most popular". If no redundancy is found and the HI table size is L, the first HI candidate is removed, and all other HI candidates with the same occurrence count as the new HI candidate are moved forward. Finally, the new HI candidate is appended before other candidate with higher occurrences in the table.

According to another variant of the first embodiment, the HI table may be reset (emptied) when starting coding/decoding a new tile/slice/subpicture/frame/or one predefined region (such as a block of size 512 × 512, or 1024 × 1024).

According to another variant of the first embodiment, the value of the HI table size L may be predefined and fixed for all sequences or be signaled in at least one of view parameter set (VPS), a sequence parameter set (SPS), a picture parameter set (PPS), an adaptation parameter set (APS), or a picture header (PH).

Feature(s) associated with Temporal intra merge candidates are provided herein.

In a second embodiment, a temporal intra merge candidate is included in the intra merge candidate list for an intra merge mode in non-I slice (i.e., inter slice, for instance B and/or P slice). When a collocated block of a current block in a reference picture is intra-coded, its associated information may be added as a temporal intra merge candidate. For instance, the reference picture may be one picture among the pictures in the reference picture list(s) used to code P/B slice. For instance, the reference picture may be a collocated picture as defined in WC. In yet another variant, the temporal intra merge candidate may be tested for the current block to check whether the associated information does exist or not in the intra merge candidate list.

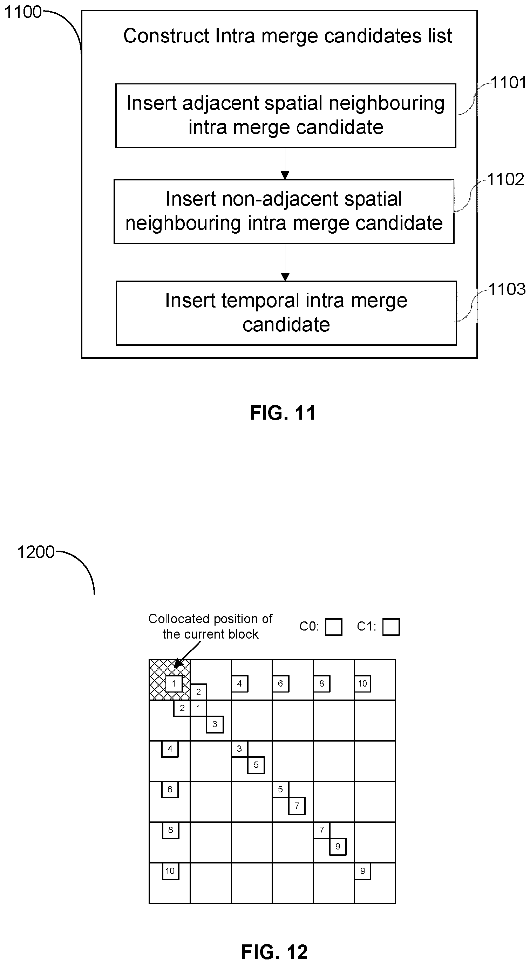

FIG. 11 illustrates a method for constructing an intra prediction merge candidates list according to an embodiment. The method 1100 may be implemented in the constructing step 1602 of the method 1600 for encoding or decoding according to a generic embodiment. In a first step 1101, intra prediction mode from adjacent spatial neighboring block may be inserted into an intra merge candidate list. An example adjacent spatial neighboring block 700 is illustrated on FIG. 7. In a second step 1102, intra prediction mode from non-adjacent spatial neighboring block may be inserted into the intra merge candidate list. An example of adjacent spatial neighboring block 700 is illustrated on FIG. 7. Then, in a step 1103, a Temporal Intra merge candidate may be inserted in the intra merge candidate list. According to a variant, the intra merge candidate list comprises a limited number of candidates, and the temporal intra merge candidate may be inserted in the intra merge candidate list if the list is not full. According to another variant, a plurality of intra merge candidate lists is defined according to the intra prediction mode, such as the following non-limiting examples DIMD, TIMD, intraTMP. According to another variant, one temporal intra merge candidate may comprise an intra prediction mode and intra information (for instance TIMD, DIMD or IntraTMP information as disclosed with history-based candidates) of a collocated block of the block in a reference picture.

Thus, as shown on FIG. 11, after including spatial adjacent and non-adjacent candidates, the temporal intra merge candidates are added in 1103 into the intra merge list if it is not full. To avoid including redundant intra prediction modes and/or associated information in the list, pruning operations may apply.

A collocated picture is defined only when temporal motion vector prediction (TMVP) is enabled. For example, in WC video compression standard, TMVP is enabled when *ph_temporal_mvp_enabled_flag* is equal to 1. The collocated picture is specified in VVC as follows: At the beginning of decoding each P or B slice, after the decoding of the slice header, and once reference picture lists are computed for the current slice, the collocated picture is determined as the reference picture with index equal to parsed picture header syntax element *ph_collocated_ref_idx,* in the reference picture list L0 or L1 identified by picture header syntax element *ph_collocated_from_l0_flag*. If these two syntax elements are not present in picture header, then slice header syntax elements *sh_collocated_from_l0_flag* and *sh_collocated_ref_idx* are used to identify the collocated picture of current picture.

FIG. 12 illustrates a position of a collocated block of the current block in a reference/collocated picture with example of additional positions according to a variant embodiment.

In one variant of the second embodiment, multiple temporal intra merge candidates may be searched at multiple positions besides the position of a collocated block and may be included into the merge candidate list for an intra prediction merge mode. For example, multiple positions from the reference/collocated picture (e.g., 10 positions $C0i$ with $1 \leq i \leq 10$ as depicted in FIG. 12) are searched in the following order: $C01$, $C02$, ... then $C010$. If $C0i$ is not available (i.e., the position of $C0i$ is outside of picture/slice boundary, or outside of the current CTU row) and $C1i$ is available, $C1i$ may be used to replace $C0i$ with $1 \leq i \leq 10$. Otherwise, when both $C0i$ and $C1i$ are not available, the next inclusion $i+1$ position is checked.

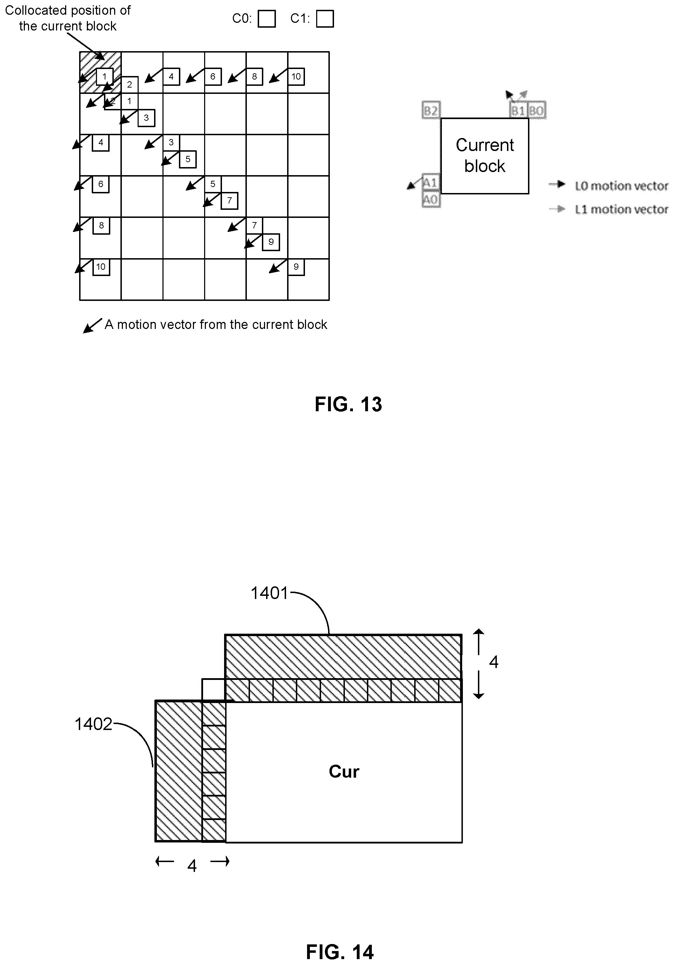

FIG. 13 illustrates a shifted position of a collocated block of the current block in a reference/collocated picture according to a variant embodiment.

In another variant of the second embodiment, multiple shifted temporal intra merge candidates may be searched and may be included into the intra merge candidate list for an intra prediction merge mode. For the shifted temporal intra merge candidates, one example may shift the position of the collocated block by a selected neighboring motion vector. Consequently, the positions of $C0i$ and $C1i$ may be shifted by the same neighboring motion vector. The inclusion order of shifted temporal candidates may be the same as that of temporal candidates. The neighboring motion vector is selected from the motion vectors of the neighboring blocks as depicted in FIG. 13. The checking order is as follow: L0 of B1, L1 of B1, L0 of A1, L1 of A1, L0 of B0, L1 of B0, L0 of A0, L1 of A0, L0 of B2, then L1 of B2. The first motion vector which uses the reference/collocated picture as the reference picture is selected. If no such motion vector is found, no shifted temporal intra merge candidate is added.

Feature(s) associated with reordering of intra merge candidates based on the template cost are provided herein.

In a third embodiment, the order of the intra merge candidates may be derived based on template cost. For instance, the template cost may be the SAD (or SATD) between the prediction and reconstruction of the neighboring template of the current block.

Fig 14 illustrates an example of a current block and a neighboring template according to an embodiment. For example, a reordering step may be added after the construction of the intra merge candidate list (for instance after step 1602 and before 1603 of FIG. 16). A template may be used to reorder this intra merge candidate list. As shown on FIG. 14, the template size may be set equal to 4, i.e., the height of the top template part 1401 is 4 and the width of the left template part 1402 is 4. For each intra merge candidate, a prediction is generated for the template. The SAD (or SATD) cost between the prediction and reconstruction of the template of the current block is calculated. The intra merge candidate list is reordered depending on the template SAD (or SATD) costs, and up to an allowable maximum number of intra merge candidates may be selected and may be used for intra merge mode from the reordered intra merge candidate list. The value of the allowable maximum number of intra merge candidates N may be pre-defined and fixed, or be signaled in at least one of sequence parameter set (SPS), a view parameter set (VPS), a picture parameter set (PPS), an adaptation parameter set (APS), or a picture header (PH), or be derived based on some conditions/parameters, such as block size.

In one variant of the third embodiment, the intra merge candidate with the minimum template cost SAD (or SATD) may be directly selected to generate the final prediction for the intra merge mode. In this case, the index to indicate which intra merge candidate is used for the block, may be saved, meaning that there is no need to signal the index, the candidate being derived for the ordered list.

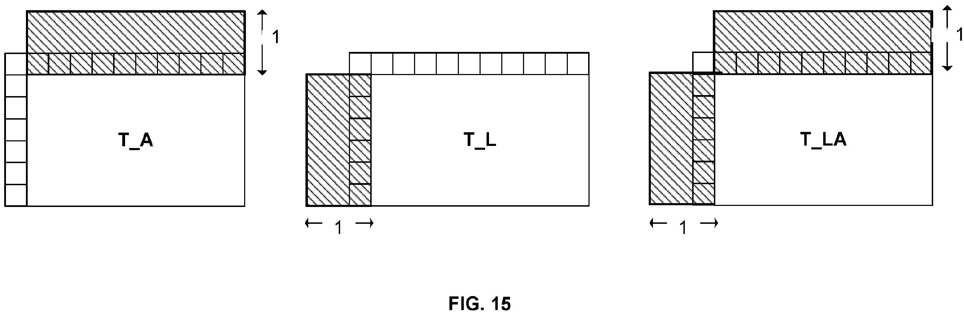

In another variant of the third embodiment, the template used for reordering, may be constructed from row(s) above and/or column(s) left to the current block, and the shape of the template may be determined by the block shape. Fig 15 illustrates different examples of a current block and a neighboring template according to various embodiments. For example, only columns left to the current block are used for constructing the template if the height of the current block is larger than the width (as T_L shown in FIG. 15). According to another example, only rows above to the current block may be used for constructing the template if the width of the current block is larger than the height (as T_A shown in FIG. 15). According to yet another example, for square blocks, both rows above and columns left to the current block may be used for the template (as T_LA shown in FIG. 15).

In another variant of the third embodiment, the size of the template used for reordering, may be adapted based on the block size (i.e., width and/or height of the block).

Feature(s) associated with Intra merge candidate fusion are provided herein.

In the fourth embodiment, the fusion of multiple (e.g., 2 or more) intra merge candidates is performed. For example, each intra merge candidate generates a prediction of the template, and the SAD (or SATD) cost between its reconstruction of the template is calculated. The two intra merge candidates with minimum template prediction cost SADs (or SATDs) may be selected. The final prediction of the current block may arise from the blending of the two predictions of this block via the first and second selected intra merge candidates respectively. The blending weights may depend on the SAD cost (i.e., $sad_0$ and $sad_1$).

In one variant of the fourth embodiment, an additional flag (i.e., IsBlend) may be signaled to indicate whether the intra merge candidate blending applies.

In another variant of the fourth embodiment, a blending condition may be defined. Let IsBlend denote the flag indicating whether the intra merge candidate blending applies, and its value could be derived from the SADs cost comparison. Let $sad_0$ and $sad_1$ be the smallest and second smallest prediction SADs respectively:

$$IsBlend = sad_1 < 2sad_0.$$

If IsBlend is false, the final prediction of the current block from its set of reference samples is performed using the first selected intra merge candidate. Otherwise, the final prediction of the current block may arise from the blending of the two predictions of this block via the first and second selected intra merge candidates respectively. The blending weights may depend on the SAD cost.

In another variant of the fourth embodiment, the final prediction of the current block may arise from a simple (1:1) average of the two predictions of this block via the first and second selected intra merge candidates respectively.

In another variant of the fourth embodiment, the blending weights may be derived with Wiener-filter based weight derivation method.

In another variant of the fourth embodiment, the blending weights may be pre-defined as some fix values for all sequences, or may be signaled in at least one of sequence parameter set (SPS), a view parameter set (VPS), a picture parameter set (PPS), an adaptation parameter set (APS), or a picture header (PH). Alternatively, the blending weights may be dependent on the QP, color components, transform types/cores/kernels, slice types, sequence class and configuration.

Feature(s) associated with Intra merge mode extension are provided herein.

To further improve the prediction quality, a fifth embodiment proposes to extend the intra merge mode to apply to any of intra block copy (IBC), intra sub-partitions (ISP), matrix-based intra prediction (MIP), new matrix-based intra prediction (MIP2), template-based multiple reference line (TMRL), extrapolation based intra prediction (EIP), angular intra prediction modes, or spatial geometric partitioning modes (SGPM)

For example, an additional intra merge candidate list may be constructed for MIP2 mode, which stores MIP2 information ({intra angular indexes, the matrix of weights}) retrieved from a neighbor block coded by MIP2 mode.

A sixth embodiment proposes to extend the intra merge mode to apply on chroma blocks, or some specific intra chroma modes such as cross-component linear model (CCLM), convolutional cross-component model (CCCM), chroma direct block vector (DBV).

In one variant of the sixth embodiment, in case of separate luma / chroma trees, the intra chroma merge mode may be controlled separately from the corresponding luma blocks.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the intra prediction module (260) of a video encoder 200 as shown in FIG. 2 or the intra prediction module (360) of a video decoder 300 as shown in FIG. 3. Moreover, the present aspects are not limited to ECM and WC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

- wherein the intra prediction candidates list may include at least one history-based candidate and at least one temporal intra candidate;

- wherein the intra merge mode may apply similarly in both an encoder or a decoder;
- wherein the intra prediction candidate list may include block vector-based intra prediction modes (IBC), intra sub-partitions (ISP), matrix-based intra prediction (MIP), new matrix-based intra prediction (MIP2), template-based multiple reference line (TMRL), extrapolation filter-based intra prediction (EIP) modes, angular intra prediction modes, or spatial geometric partitioning modes (SGPM);
- wherein an intra merge candidates list is constructed for a luma component of the block and a separate intra merge candidates list is constructed for a chroma component of the block;
- wherein the at least one indication from the video bitstream includes an intra prediction merge enablement flag that is applicable to any of the selected intra prediction candidate, the selected second prediction candidate;
- wherein the merge candidate is selected based on an index included in the video bitstream that indicates a position of the intra merge candidate in the intra merge candidates list;
- further comprising determining, based on the selected merge candidate, a set of prediction parameters associated the selected intra merge candidate, wherein the block is decoded further based on the set of prediction parameters.

**Claims**

1. A method for video decoding, comprising:

    determining, based on at least one indication from a video bitstream, whether a block is coded in an intra merge prediction mode;
    responsive to determining that the block is coded in the intra merge prediction mode:

      constructing an intra merge candidates list that includes at least one temporal intra merge candidate for the block belonging to an inter slice;
      selecting an intra merge candidate from the intra merge candidates list; and decoding the block based at least on the selected intra merge candidate.

2. A device for video decoding comprising one or more processors configured to:

    determine, based on at least one indication from a video bitstream, whether a block is coded in an intra merge prediction mode;
    responsive to determining that the block is coded in the intra merge prediction mode:

construct an intra merge candidates list that includes at least one temporal intra merge candidate for the block belonging to an inter slice;
select an intra merge candidate from the intra merge candidates list; and

decode the block based at least on the selected intra merge candidate.

3. The method of claim 1 or the device of claim 2, wherein one temporal intra merge candidate comprises an intra prediction mode and intra information of a collocated block of the block in a reference picture.

4. The method of claim 3 or the device of claim 2, wherein a position of the collocated block of the block in the reference picture corresponds to one among multiple positions in an area neighboring the collocated block in the reference picture.

5. The method of any of claims 3-4 or the device of any of claims 3-4, wherein a position of the collocated block of the block in the reference picture is shifted by a motion vector.

6. A method for video decoding, comprising:

    determining, based on at least one indication from a video bitstream, whether a block is coded in an intra merge prediction mode; and
    responsive to determining that the block is coded in the intra merge prediction mode:

      constructing an intra merge candidates list that includes at least one history-based intra merge candidate;
      selecting an intra merge candidate from the intra merge candidates list; and decoding the block based at least on the selected intra merge candidate.

7. A device for video decoding comprising one or more processors configured to:

    determine, based on at least one indication from a video bitstream, whether a block is coded in an intra merge prediction mode;
    responsive to determining that the block is coded in the intra merge prediction mode:

      construct an intra merge candidates list that includes at least one history-based intra merge candidate;
      select an intra merge candidate from the intra merge candidates list; and

decode the block based at least on the selected intra merge candidate.

8. The method of claim 6 or the device of claim 7, further comprising constructing a table with multiple history-based intra merge candidates, and wherein the at least one history-based intra merge candidate of the intra merge candidates list is obtained from the table.

9. The method of claim 8 or the device of claim 8, wherein the table has a limited number of history-based intra merge candidates.

10. The method of claim 8 or the device of claim 8, further comprising constructing a table with multiple history-based intra merge candidates for each intra mode among a template-based intra prediction mode TIMD, a decoder side intra mode derivation DIMD, an Intra template matching IntraTMP.

11. The method of any of claims 1, 3-5, 6, 8-10 or the device of any of claims 2-5, 7-10 further comprising ordering of the intra merge candidates in the intra merge candidates list based on template cost.

12. The method of claim 11 or the device of claim 11, wherein the intra merge candidate with a minimum template cost is selected.

13. The method of any of claims 1, 3-5, 6, 8-12 or the device of any of claims 2-5, 7-12 further comprising selecting a second merge intra candidate from the intra merge candidates list; and wherein the decoding of the block further comprise obtaining a first prediction of the block responsive to the selected intra merge candidate, obtaining a second prediction of the block responsive to the selected second intra merge candidate, and blending the first prediction and the second prediction to generate an intra prediction of the block.

14. The method of claim 13 or the device of claim 13, wherein weights in the blending are derived from respective template cost of the selected intra merge candidate and of the selected second intra merge candidate.

**FIG. 1**

FIG. 2

FIG. 3

EP 4 676 032 A1

FIG. 4

FIG. 5

**FIG. 6**

FIG. 7

800

Construct Intra merge candidates list

Insert adjacent spatial neighbouring intra merge candidate — 801

Insert non-adjacent spatial neighbouring intra merge candidate — 802

Insert HI candidates — 803

**FIG. 8**

900

Decode a block with Intra Pred Mode — 901

Update a HI Table with Intra Pred mode of the deocded block — 902

**FIG. 9**

FIG. 10

1100

Construct Intra merge candidates list

Insert adjacent spatial neighbouring
intra merge candidate ——1101

↓

Insert non-adjacent spatial
neighbouring intra merge candidate ——1102

↓

Insert temporal intra merge
candidate ——1103

**FIG. 11**

1200

Collocated position of
the current block      C0: ☐   C1: ☐

**FIG. 12**

**FIG. 13**

**FIG. 14**

**FIG. 15**

EP 4 676 032 A1

FIG. 16

Europäisches
Patentamt

European
Patent Office

Office européen
des brevets

## EUROPEAN SEARCH REPORT

**Application Number**

EP 24 30 6083

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/275120 A1 (LIN YU-CHENG [TW] ET AL) 27 August 2020 (2020-08-27) * paragraphs [0032], [0105] - paragraph [0134]; figures 11,12 * ----- | 1-14 | INV. H04N19/105 H04N19/11 H04N19/176 H04N19/593 |
| X | XU (OPPO) L ET AL: "AHG12: Temporal BV for IBC merge list construction", 34. JVET MEETING; 20240417 - 20240424; RENNES; (THE JOINT VIDEO EXPLORATION TEAM OF ISO/IEC JTC1/SC29/WG11 AND ITU-T SG.16) , no. JVET-AH0059 10 April 2024 (2024-04-10), XP030317260, Retrieved from the Internet: URL:https://jvet-experts.org/doc_end_user/ documents/34_Rennes/wg11/JVET-AH0059-v3.zi p JVET-AH0059-v1.docx [retrieved on 2024-04-10] * the whole document * ----- | 1-14 | |
| X | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16) , no. JVET-AG2025 ; m66954 29 March 2024 (2024-03-29), XP030316747, Retrieved from the Internet: URL:https://jvet-experts.org/doc_end_user/ documents/33_Teleconference/wg11/JVET-AG20 25-v1.zip JVET-AG2025-v1.docx [retrieved on 2024-03-29] | 7-14 | TECHNICAL FIELDS SEARCHED (IPC) H04N |
| A | * abstract * * pages 53-55, paragraph 3.2.17 - paragraph 3.2.18 * ----- -/-- | 1-6 | |

The present search report has been drawn up for all claims

| Place of search | Date of completion of the search | Examiner |
|---|---|---|
| Munich | 5 November 2024 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | **Application Number** EP 24 30 6083 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/359470 A1 (LEE JIN-YOUNG [KR] ET AL) 13 December 2018 (2018-12-13) | 7-14 | |
| A | * paragraph [0194] - paragraph [0386]; figures 6,7 * ----- | 1-6 | |
| A | Y-J CHANG (QUALCOMM) ET AL: "Non-EE2: Intra merge mode", 146. MPEG MEETING; 20240422 - 20240426; RENNES; (MOTION PICTURE EXPERT GROUP OR ISO/IEC JTC1/SC29/WG11) , no. m67305 10 April 2024 (2024-04-10), XP030316987, Retrieved from the Internet: URL:https://dms.mpeg.expert/doc_end_user/documents/146_Rennes/wg11/m67305-JVET-AH0211-v1-JVET-AH0211-v1.zip JVET-AH0211-v1/JVET-AH0211.docx [retrieved on 2024-04-10] * the whole document * ----- | 1-14 | |
| A | WO 2023/191585 A1 (ELECTRONICS & TELECOMMUNICATIONS RES INST [KR]) 5 October 2023 (2023-10-05) * paragraph [1114]; figure 50b * ----- | 1-14 | TECHNICAL FIELDS SEARCHED (IPC) |
| A | US 2023/130158 A1 (GAO HAN [CN] ET AL) 27 April 2023 (2023-04-27) * the whole document * ----- | 1-14 | |

The present search report has been drawn up for all claims

| Place of search | Date of completion of the search | Examiner |
|---|---|---|
| Munich | 5 November 2024 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 6083

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2024

| Patent document cited in search report | | | Publication date | Patent family member(s) | | Publication date |
|---|---|---|---|---|---|---|
| US 2020275120 | A1 | | 27-08-2020 | CA | 3126882 A1 | 27-08-2020 |
| | | | | CN | 113455003 A | 28-09-2021 |
| | | | | EP | 3918803 A1 | 08-12-2021 |
| | | | | TW | 202038620 A | 16-10-2020 |
| | | | | TW | 202038621 A | 16-10-2020 |
| | | | | US | 2020275093 A1 | 27-08-2020 |
| | | | | US | 2020275120 A1 | 27-08-2020 |
| | | | | WO | 2020169082 A1 | 27-08-2020 |
| US 2018359470 | A1 | | 13-12-2018 | KR | 20180085714 A | 27-07-2018 |
| | | | | US | 2018359470 A1 | 13-12-2018 |
| | | | | WO | 2017105097 A1 | 22-06-2017 |
| WO 2023191585 | A1 | | 05-10-2023 | KR | 20230141648 A | 10-10-2023 |
| | | | | WO | 2023191585 A1 | 05-10-2023 |
| US 2023130158 | A1 | | 27-04-2023 | AU | 2020233003 A1 | 10-06-2021 |
| | | | | AU | 2024201140 A1 | 14-03-2024 |
| | | | | BR | 112021009922 A2 | 28-09-2021 |
| | | | | CA | 3120795 A1 | 10-09-2020 |
| | | | | CN | 112889290 A | 01-06-2021 |
| | | | | CN | 113660497 A | 16-11-2021 |
| | | | | EP | 3878181 A1 | 15-09-2021 |
| | | | | JP | 7477066 B2 | 01-05-2024 |
| | | | | JP | 2022522570 A | 20-04-2022 |
| | | | | KR | 20210088688 A | 14-07-2021 |
| | | | | KR | 20240093885 A | 24-06-2024 |
| | | | | UA | 128216 C2 | 08-05-2024 |
| | | | | US | 2020374541 A1 | 26-11-2020 |
| | | | | US | 2023130158 A1 | 27-04-2023 |
| | | | | US | 2024323427 A1 | 26-09-2024 |
| | | | | WO | 2020177505 A1 | 10-09-2020 |

EPO FORM P0459

For more details about this annex : see Official Journal of the European Patent Office, No. 12/82